(19) Europäisches Patentamt / European Patent Office / Office européen des brevets

(11) **EP 3 488 603 B1**

(12) **EUROPEAN PATENT SPECIFICATION**

(45) Date of publication and mention of the grant of the patent:
**28.07.2021 Bulletin 2021/30**

(21) Application number: **17910876.6**

(22) Date of filing: **24.05.2017**

(51) Int Cl.:
*H04N 5/222* (2006.01)     *H04N 5/262* (2006.01)
*H04N 5/272* (2006.01)     *G06T 7/55* (2017.01)
*B64C 39/02* (2006.01)     *G06T 5/00* (2006.01)

(86) International application number:
**PCT/CN2017/085757**

(87) International publication number:
**WO 2018/214067 (29.11.2018 Gazette 2018/48)**

(54) **METHODS AND SYSTEMS FOR PROCESSING AN IMAGE**

VERFAHREN UND SYSTEME ZUR VERARBEITUNG EINES BILDES

PROCÉDÉS ET SYSTÈMES DE TRAITEMENT D'UNE IMAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.05.2019 Bulletin 2019/22**

(73) Proprietor: **SZ DJI Technology Co., Ltd.**
**Shenzhen, Guangdong 518057 (CN)**

(72) Inventors:
• **ZHOU, You**
  **Shenzhen**
  **Guangdong 518057 (CN)**
• **LIU, Jie**
  **Shenzhen**
  **Guangdong 518057 (CN)**
• **TANG, Ketan**
  **Shenzhen**
  **Guangdong 518057 (CN)**

(74) Representative: **Appelt, Christian W.**
**Boehmert & Boehmert**
**Anwaltspartnerschaft mbB**
**Pettenkoferstrasse 22**
**80336 München (DE)**

(56) References cited:
EP-A1- 2 410 377          WO-A1-2016/064248
WO-A1-2016/070318         WO-A1-2017/043031
CN-A- 101 933 040         CN-A- 102 857 686
CN-A- 104 333 700         CN-A- 105 874 776
CN-A- 106 029 501         US-A1- 2014 009 585
US-A1- 2014 079 288       US-A1- 2014 211 045
US-A1- 2015 116 353       US-A1- 2015 116 529

EP 3 488 603 B1

**Description**

Technical Field

The present disclosure relates generally to image processing techniques and, more particularly, to methods and systems for partially blurring an image.

Background

In contemporary photography, techniques exist for capturing and processing images in which certain objects in the image are presented clearly (e.g., in focus) while other objects in the background and/or foreground objects appear blurry (e.g., out-of-focus). In particular, a target portion of the image is presented clearly while other portions in the image are softened using an optical and/or digital blurring process. These techniques result in an image with an emphasized or highlighted point of interest (e.g., a target), which is set apart from other features in the image because it is in focus compared with other portions of the image, which appear out-of-focus.

Producing this type of image generally requires a particular type of camera or specific post-processing algorithms to generate the sharp and blurry portions. Particular cameras that may be used for this technique include those that can optically focus on a target. These include single-lens reflex (SLR) cameras with aperture control, cameras with perspective control lenses (e.g., tilt-and-shift lenses), and light field cameras. Some camera systems, including those in certain smartphones, may also accomplish this blurring effect by capturing digital images with an array of pixels and re-rendering the images using post-processing algorithms to blur pixels outside a desired depth of focus. The algorithms may, for example, capitalize on a smartphone's dual-camera system to capture stereoscopic images from which a depth of focus can be identified for the post-processing blurring algorithms, or alternatively, other camera systems may employ a manual pixel-blurring algorithm applied to a single image. The latter approach, however, results in unnatural blurring that is not aesthetically appealing.

Processing multiple images from different perspectives yields the best results, producing a target in clear resolution while surrounding objects are softened by blurring in a manner that appears more natural to the human eye. However, existing techniques for rendering such partially-blurred images are unsuitable for cameras that move significantly between captured images, such as cameras mounted to movable objects, and particularly for non-stereoscopic cameras (e.g., 2D cameras) mounted to movable objects. Therefore, an improved method of processing an image is desired, where a partially-blurred image can be generated from images captured by cameras mounted on a moving object, such as an unmanned aerial vehicle (UAV).

US 2015/116353 A1 discloses an image processing device and the like that can generate a composite image in a desired focusing condition. In a smartphone, an edge detecting section detects an edge as a feature from a plurality of input images taken with different focusing distances, and detects the intensity of the edge as a feature value. A depth estimating section then estimates the depth of a target pixel, which is information representing which of the plurality of input images is in focus at the target pixel, by using the edge intensity detected by the edge detecting section. A depth map generating section then generates a depth map based on the estimation results by the depth estimating section.

US 2014/211045 A1 discloses an image processing apparatus that has a depth map acquiring unit configured to acquire a depth map that records information indicating a depth distance corresponding to each point on a photographed image; an in-focus position acquiring unit configured to acquire an in-focus position on the photographed image; a reference distance determining unit configured to acquire a depth distance corresponding to the in-focus position from the depth map and sets the acquired depth distance as a reference distance; and an image processing unit configured to perform image processing on the photographed image by using the depth map and the reference distance.

WO 2016/064248 A1 discloses electronic devices and methods for processing images. The method includes obtaining a first image and a second image through a first image sensor, extracting depth information from at least one third image obtained through a second image sensor, applying the extracted depth information to the obtained first image and displaying the first image, and applying the extracted depth information to the obtained second image.

EP 2 410 377 A1 discloses a method and apparatus for decreasing the depth of field of images taken by a camera having a fixed aperture, comprising capturing a plurality of images; generating a depth map from the captured images; isolating a plurality of gray zones within the depth map; generating a plurality of image layers having respective depths of field corresponding to respective ones of the plurality of gray zones; selecting one of the image layers as a focus plane; blurring all other image layers; and superimposing the image layers to create a composite image wherein objects located at the focus plane are in focus and objects at all other depths of field are out of focus.

WO 2017/043031 A1 discloses an image processing device and method for processing images captured at different times. The method may comprise determining a location of a first area in a first image, determining in a second image captured at a different time than the first image, a location of a second area, wherein the first area and the second area include a same object, and determining a new background area in the second image based on the location of the first area and the location of the second area, wherein the new background area includes a portion of the second image included in the first area but not included in the second area.

Summary

The present disclosure relates to systems and methods for processing an image having a first set of pixels, the systems and methods being defined in the appended claims. In the disclosed embodiments, the method may include generating a depth map of the image, the depth map including a second set of pixel values representative of distances of objects in the image. The method may further include identifying a plurality of different depths at which objects are located in the image based on the depth map, and using the depth map to determine a relative distance between one identified depth (e.g., a "target" depth) in the plurality of different depths and each of the other identified depths in the plurality of different depths. Furthermore, the method may include blurring pixels in the first set of pixels based on each determined relative distance. In some embodiments, at least some pixels in the first set of pixels may be blurred in a descending order from pixels at an identified depth corresponding to the farthest relative distance from the target depth to pixels at an identified depth corresponding to the closest relative distance to the target depth.

Further to the disclosed embodiments, systems are provided for processing an image having a first set of pixels. The system may include a memory having instructions stored therein and one or more processors configured to execute the instructions. The one or more processors may be configured to execute the instructions to generate a depth map of the image, the depth map including a second set of pixel values representative of distances of objects in the image. The one or more processors may further be configured to identify a plurality of different depths at which objects are located in the image based on the depth map, and use the depth map to determine a relative distance between one identified depth in the plurality of different depths and each of the other identified depths in the plurality of different depths. Furthermore, the one or more processors may be configured to blur pixels in the first set of pixels based on each determined relative distance.

In some disclosed embodiments, the present disclosure also relates to an UAV. The UAV may include a propulsion device, a communication device, at least one image capture device, a memory storing instructions, and one or more processors in communication with the communication device and configured to control the UAV. The one or more processors may be configured to execute the instructions to generate a depth map of an image having a first set of pixel values, the depth map including a second set of pixel values representative of distances of objects in the image. The one or more processors may further be configured to identify a plurality of different depths at which objects are located in the image based on the depth map, and use the depth map to determine a relative distance between one identified depth in the plurality of different depths and each of the other identified depths in the plurality of different depths. Furthermore, the controller may be configured to blur pixels in the first set of pixels based on each determined relative distance.

In still other disclosed embodiments, the present disclosure relates to a non-transitory computer readable medium storing instructions that, when executed by at least one processor, perform a method for processing an image having a first set of pixels. In the disclosed embodiments, the method may include generating a depth map of the image, the depth map including a second set of pixel values representative of distances of objects in the image. The method may further include identifying a plurality of different depths at which objects are located in the image based on the depth map, and using the depth map to determine a relative distance between one identified depth in the plurality of different depths and each of the other identified depths in the plurality of different depths. Furthermore, the method may include blurring pixels in the first set of pixels based on each determined relative distance.

Brief Description of the Drawings

Fig. 1A is a schematic block diagram of an exemplary movable object having an image capture device consistent with embodiments of the present disclosure;

Fig. 1B is a schematic block diagram of an exemplary control system of a movable object consistent with embodiments of the present disclosure;

Fig. 1C is a schematic block diagram of an exemplary user terminal consistent with embodiments of the present disclosure;

Fig. 2 is an exemplary image having a first set of pixels in accordance with a disclosed embodiment;

Fig. 3 is a flowchart illustrating an exemplary sequence that may be performed for processing an image, such as the image of Fig. 2, consistent with embodiments of the present disclosure;

Fig. 4 is an exemplary depth map of the image of Fig. 2, consistent with embodiments of the present disclosure;

Fig. 5 is a histogram displaying the groups of pixel values generated based the depth map of Fig. 4, consistent with embodiments of the present disclosure;

Fig. 6 is a flowchart illustrating an exemplary sequence that may be performed for blurring the first set of pixels in an image, such as the image of Fig. 2, consistent with embodiments of the present disclosure;

Fig. 7 is a flowchart illustrating an exemplary sequence that may be performed for generating the depth map of Fig. 4 and the groups of pixel values shown in Fig. 5, consistent with embodiments of the present disclosure;

Fig. 8 is the exemplary image of Fig. 2 after certain pixels have been blurred using the exemplary sequence of Fig. 3, consistent with the disclosed embodiments; and

Fig. 9 is a flowchart illustrating an exemplary sequence that may be performed for tracking a target and obtaining images of the target object in accordance with the disclosed embodiments.

Detailed Description

The following detailed description refers to the accompanying drawings. Wherever possible, the same reference numbers are used in the drawings and the following description to refer to the same or similar parts. While several illustrative embodiments are described herein, modifications, adaptations and other implementations are possible. For example, substitutions, additions or modifications may be made to the components illustrated in the drawings, and the illustrative methods described herein may be modified by substituting, reordering, removing, or adding steps to the disclosed methods. Accordingly, the following detailed description is not limited to the disclosed embodiments and examples. Instead, the proper scope is defined by the appended claims.

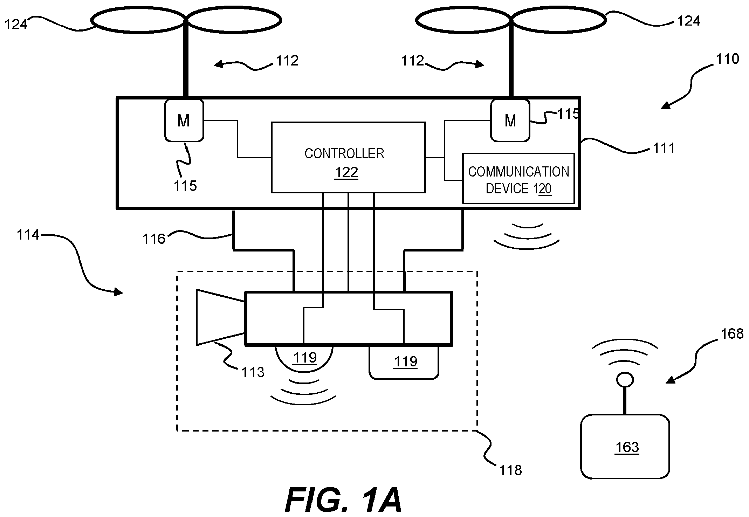

Fig. 1A shows an exemplary movable object 110 that may be configured to move or travel within an environment. Movable object 110 may be any suitable object, device, mechanism, system, or machine configured to travel, move, or be moved through a suitable medium (e.g., air, water, space, underground, etc.), and/or on a suitable support (e.g., on a surface, on rails, etc.). For example, movable object 110 may be an UAV. Movable object 110 may also be an object supported by a human user, including a handheld or body-worn device. Although movable object 110 is shown and described in embodiments as a UAV for exemplary purposes of this description, it is understood that other types of movable objects (e.g., other aerial objects, wheeled objects, nautical objects, locomotive objects, handheld devices, body-worn devices, etc.) may also or alternatively be used in the disclosed embodiments consistent with this disclosure.

Referring to Fig. 1A, movable object 110 may include, among other things, a housing 111, one or more propulsion assemblies 112, and a payload 114. The movable object 110 also may include a controller 122, for example, which may be part of a larger control system. In some embodiments, payload 114 may be connected or attached to movable object 110 by a carrier 116, which may allow for one or more degrees of relative movement between payload 114 and movable object 110. In other embodiments, payload 114 may be mounted directly to movable object 110 without carrier 116. Movable object 110 may also include one or more sensors 119, a communication device 120, and a controller 122 in communication with the other components.

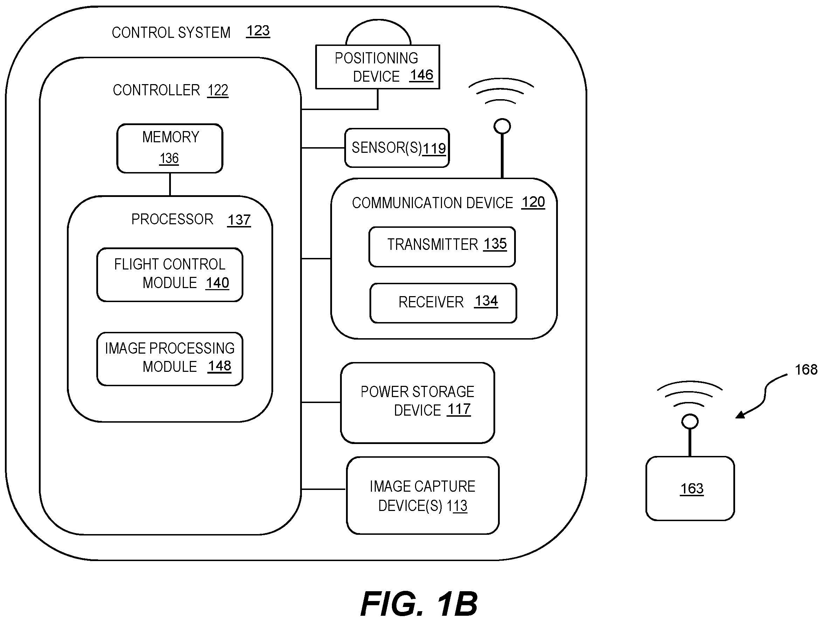

Movable object 110 may include one or more (e.g., 1, 2, 3, 4, 5, 10, 15, 20, etc.) propulsion devices, such as one or more propulsion assemblies 112 positioned at various locations (for example, top, sides, front, rear, and/or bottom of movable object 110) for propelling and steering movable object 110. Propulsion assemblies 112 may be devices or systems operable to generate forces for sustaining controlled flight. Propulsion assemblies 112 may share or may each separately include or be operatively connected to a power source 115, such as a motor M (e.g., an electric motor, hydraulic motor, pneumatic motor, etc.) or an engine (e.g., an internal combustion engine, a turbine engine, etc.). A power storage device 117 (Fig. 1B) may provide energy to the power source 115 and may include a battery bank, a fuel source, etc., or combinations thereof. Each propulsion assembly 112 may also include one or more rotary components 124 drivably connected to the power source 115 and configured to participate in the generation of forces for sustaining controlled flight. For instance, rotary components 124 may include rotors, propellers, blades, nozzles, etc., which may be driven on or by a shaft, axle, wheel, hydraulic system, pneumatic system, or other component or system configured to transfer power from the power source.

Propulsion assemblies 112 and/or rotary components 124 may be adjustable (e.g., tiltable) with respect to each other and/or with respect to movable object 110. Alternatively, propulsion assemblies 112 and rotary components 124 may have a fixed orientation with respect to each other and/or movable object 110. In some embodiments, each propulsion assembly 112 may be of the same type. In other embodiments, propulsion assemblies 112 may be of different types. In some embodiments, all propulsion assemblies 112 may be controlled in concert (e.g., at the same speed and/or angle). In other embodiments, one or more propulsion devices may be independently controlled with respect to, e.g., speed and/or angle.

Propulsion assemblies 112 may be configured to propel movable object 110 in one or more vertical and horizontal directions and to allow movable object 110 to rotate about one or more axes. That is, propulsion assemblies 112 may be configured to provide lift and/or thrust for creating and maintaining translational and rotational movements of movable object 110. For instance, propulsion assemblies 112 may be configured to enable movable object 110 to achieve and maintain desired altitudes, provide thrust for movement in all directions, and provide for steering of movable object 110.

In some embodiments, propulsion assemblies 112 may enable movable object 110 to perform vertical takeoffs and landings (i.e., takeoff and landing without horizontal thrust). In other embodiments, movable object 110 may require constant minimum horizontal thrust to achieve and sustain flight. Propulsion assemblies 112 may be configured to enable movement of movable object 110 along and/or about multiple axes.

Payload 114 may include one or more sensors 118. Sensors 118 may include devices for collecting or generating data or information, such as surveying, tracking, and capturing images or video of targets (e.g., objects, landscapes, subjects of photo or video shoots, etc.). Sensors 118 may include one or more image capture devices 113 configured to gather data that may be used to generate images. For example, imaging capture devices 113 may include photographic cameras, video cameras, infrared imaging devices, ultraviolet imaging devices, x-ray devices, ultrasonic imaging devices, radar devices, etc. Sensors 118 may also or alternatively include sensor devices 119 for range-finding or for capturing visual, audio, and/or electromagnetic signals.

Sensor devices 119 may also or alternatively include devices for measuring, calculating, or otherwise determining the position or location of movable object 110. For instance, sensor devices 119 may include devices for determining the height (i.e., distance above the ground) of movable object 110 and/or the altitude (i.e., with respect to sea level) of movable object 110. Sensor devices 119 may include optical sensors, ultrasonic sensors, barometers, radar systems (e.g., millimeter wave radar), laser systems (e.g., LIDAR, etc.), etc. In some embodiments, movable object 110 may be equipped with multiple sensor devices 119, each operable to generate a different measurement signal. Sensor devices 119 may also or alternatively be or include devices for determining the movements, orientation, and/or location of movable object 110, such as a positioning device 146 for a positioning system (e.g., GPS, GLONASS, Galileo, Beidou, GAGAN, etc.), motion sensors, inertial sensors (e.g., IMU sensors), proximity sensors, image sensors, etc. Sensor devices 119 may also include devices or be configured to provide data or information relating to the surrounding environment, such as weather information (e.g., temperature, pressure, humidity, etc.), lighting conditions, air constituents, or nearby obstacles (e.g., objects, structures, people, other vehicles, etc.)

Carrier 116 may include one or more devices configured to hold the payload 114 and/or allow the payload 114 to be adjusted (e.g., rotated) with respect to movable object 110. For example, carrier 116 may be a gimbal. Carrier 116 may be configured to allow payload 114 to be rotated about one or more axes, as described below. In some embodiments, carrier 116 may be configured to allow 360° of rotation about each axis to allow for greater control of the perspective of the payload 114. In other embodiments, carrier 116 may limit the range of rotation of payload 114 to less than 360° (e.g., $\leq 270°$, $\leq 210°$, $\leq 180$, $\leq 120°$, $\leq 90°$, $\leq 45°$, $\leq 30°$, $\leq 15°$, etc.), about one or more of its axes.

In addition to sensors 118 on payload 114, movable object 110 and/or carrier 116 may also include one or more sensors on movable object 110 and/or carrier 116 and not on payload 114. Alternatively, the movable object 110 may include the sensors 118 on both the payload 114 and other elements of the movable object 110.

Fig. 1B shows an exemplary control system 123 of the movable object 110 consistent with the disclosed embodiments. Control system 123 is configured to control movable object 110 and receive inputs from off-board entities. Control system 123 may include sensor devices 119, positioning device 146, communication device 20, one or more image capture devices 113, and propulsion assemblies 112, all in communication with controller 122. Controller 122 may include one or more components, for example, a memory 136 and at least one processor 137. Memory 136 may be or include non-transitory computer-readable media and can include one or more memory units of non-transitory computer-readable media. Non-transitory computer-readable media of memory 136 may be or include any type of volatile or non-volatile memory, for example, including floppy disks, optical discs, DVD, CD-ROMs, microdrive, and magneto-optical disks, ROMs, RAMs, EPROMs, EEPROMs, DRAMs, VRAMs, flash memory devices, magnetic or optical cards, nanosystems (including molecular memory ICs), or any type of media or device suitable for storing instructions and/or data. Memory units may include permanent and/or removable portions of non-transitory computer-readable media (e.g., removable media or external storage, such as an SD card, RAM, etc.).

Information and data obtained from the sensor devices 119 and/or image capture device 113 may be communicated to and stored in non-transitory computer-readable media of memory 136. Non-transitory computer-readable media associated with memory 136 may also be configured to store logic, code and/or program instructions executable by processor 137 or any other processor to perform embodiments of the methods described herein. For example, non-transitory computer-readable media associated with memory 136 may be configured to store computer-readable instructions that, when executed by processor 137, cause the processor to perform a method comprising one or more steps. The method performed by the processor based on the instructions stored in the non-transitory computer readable media may involve processing inputs, such as inputs of data or information stored in the non-transitory computer-readable media of memory 136, inputs received from an external terminal 163, inputs received from sensor devices 119 and/or image capture devices 113 (e.g., received directly or retrieved from memory), and/or other inputs received via communication device 120. The non-transitory computer-readable media may be configured to store sensor data from sensor device 119 and images from image capture devices 113 to be processed by processor 137. The non-transitory computer-readable media may also be configured to transmit sensor data from sensor device 119 and images from image capture devices 113 to the terminal 163 for processing. In some embodiments, the non-transitory computer-readable media can be used to store the processing results produced by processor 137.

Processor 137 may include one or more processors and may embody a programmable processor, e.g., a central processing unit (CPU). Processor 137 may be operatively coupled to memory 136 or another memory device configured to store programs or instructions executable by processor 137 for performing one or more method steps. It is noted that method steps described herein may be stored in memory 136 and configured to be carried out by processor 137 to cause the method steps to be carried out by the processor 137.

In some embodiments, processor 137 may include and/or alternatively be operatively coupled to one or more modules, such as a flight control module 140 and an image processing module 148. Flight control module 140 may be configured to control propulsion assemblies 112 of movable object 110 to adjust the spatial disposition, velocity, and/or acceleration of the movable object 110 with respect to six degrees of freedom (e.g., three translational directions along its coordinate axes and three rotational directions about its coordinate axes). Image processing module 148 may be configured to receive and process images captured from the one or more image capture devices 113 before transmitting processed images to off-board entities (e.g., to terminal 163). Flight control module 140 and image processing module 148 may be implemented in software for execution on processor 137, or may be implemented in hardware and/or software components separate from processor 137 (not shown in the figure). For example, software for implementing at least a portion of the flight control module 140 or image processing module 148 may be stored in memory 136.

Processor 137 may be operatively coupled to communication device 120 and configured to transmit and/or receive data from one or more external devices (e.g., terminal 163, other movable objects, and/or other remote controllers). Communication device 120 may be configured to enable communications of data, information, commands, and/or other types of signals between controller 122 and off-board entities. Communication device 120 may include one or more components configured to send and/or receive signals, such as receiver 134, transmitter 132, or transceivers that are configured to carry out one- or two-way communication. Components of communication device 120 may be configured to communicate with off-board entities via one or more communication networks, such as radio, cellular, Bluetooth, Wi-Fi, RFID, wireless local area network (WLAN) network, wide area networks (WAN), infrared, point-to-point (P2P) networks, cloud communication, particular wireless protocols, such as, for example, IEEE 802.15.1, IEEE 802.11, and/or other types of communication networks usable to transmit signals indicative of data, information, commands, and/or other signals. For example, communication device 120 may be configured to enable communications with user input devices for providing input for controlling movable object 110 during flight, such as a remote terminal 163. Communication device 120 may also be configured to enable communications with other movable objects.

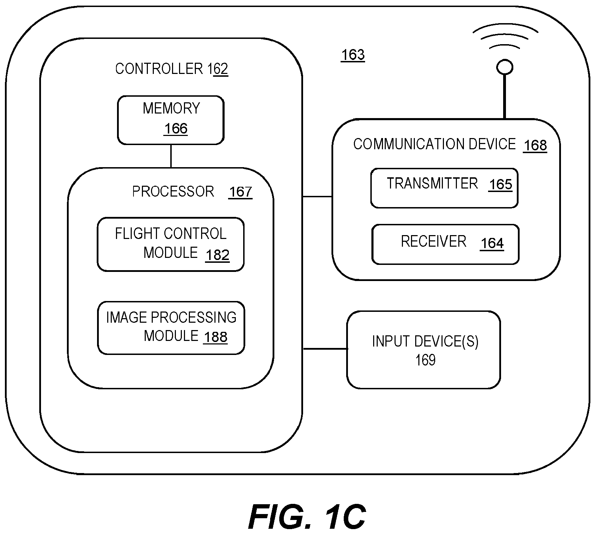

The components of controller 122 may be arranged in any suitable configuration. For example, one or more of the components of the controller 122 may be located on the movable object 110, carrier 116, payload 114, terminal 163, sensors 118, or an additional external device in communication with one or more of the above. In some embodiments, one or more processors or memory devices may be situated at different locations. These include on movable object 110, carrier 116, payload 114, terminal 163, sensors 119, or on an another off-board device in communication with one or more of the above, including any suitable combinations thereof, such that any aspect of the processing and/or memory functions performed by the system may occur at one or more of the aforementioned locations. For example, and as shown in Fig. 1C, the terminal 163 may include components such as processor 167, memory 166, image processing module 188, and flight control module 182. The image processing module 188 of terminal 163 may be utilized to process images captured by the image capture device 113 of movable object 110 off-board of movable object 110. Alternatively, image processing module 148 of movable object 110 may process the captured images, alone or in combination with image capture module 188 of terminal 163.

Referring again to Fig. 1C, terminal 163 may also include a communication device 168 facilitating communication of information between terminal 163 and other entities, such as movable object 110. Communication device 168 may include one or more antennae or other devices configured to send or receive signals (e.g., transmitter 165 and/or receiver 164). Terminal 163 may be configured to receive input, such as input from a user (i.e., via user input 169), and communicate signals indicative of the input to the controller 122. Terminal 163 may be configured to receive this input and generate corresponding signals indicative of one or more types of information, such as control data (e.g., signals) for moving or manipulating movable device 110 (e.g., via propulsion assemblies 112), payload 114, and/or carrier 116. Terminal 163 also may be configured to receive data and information from movable object 110, such as operational data relating to, for example, positional data, velocity data, acceleration data, sensor data, image data, and other data and information relating to movable object 110, its components, and/or its surrounding environment. Terminal 163 further may be configured to receive images from movable object 110 captured by image capture device 113. Terminal 163 may be a remote control with physical sticks configured to control flight parameters, a remote computing device, or a touch screen device, such as a smartphone or a tablet, with virtual controls for the same purposes, or an application on a smartphone or a table, or a combination thereof.

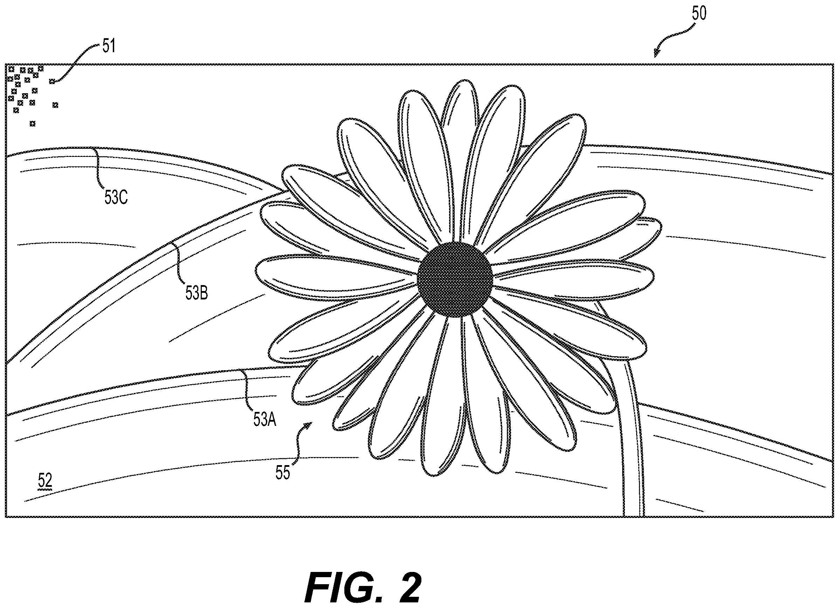

Fig. 2 illustrates an exemplary image 50 having a first set of pixels 51. Image 50 may be captured or obtained using image capture device 113 of movable object 110. Alternatively, image 50 may be otherwise retrieved or obtained, such as from at least one image file stored in one or more of memory 136, 166. Each pixel in the first set of pixels 51 is a point in the image 50, and the number of pixels 51 in the image 50 may vary with the specifications of the device used to capture the image 50 (e.g., the specifications of image capture device 113). Each pixel in an image is associated with a particular position in the image and one or more pixel values. Accordingly, a "pixel value" may refer to the one or more values associated with a pixel's position.

The image 50 may include one or more target objects or features 55 and one or more background objects or features 53. In the context of the disclosed embodiments, an object may be a physical object (e.g., a flower such as in Fig. 2) located at a certain distance from the image capture device, and the object may include one or more features (such as, for example, a stem and petals). In the disclosed embodiments, the terms "object" and "feature" may be used synonymously, because objects and/or features of an object may be partially-blurred in an image using the inventive techniques herein.

In the exemplary image 50 of Fig. 2, the target object 55 is a flower and the background objects 53 may include a mountain in the distance behind the flower, a hill located behind the flower but in front of the mountain, and a field or other ground surface in front of the flower. For purposes of simplicity and explanation only, assume the ground, flower, hill, and mountain are respectively 5, 8, 10, and 12 meters away from the image capture device. Those skilled in the art will appreciate that the inventive technique for creating a partially-blurred image herein does not depend on any particular distances of objects or features in an image, nor on the number of objects or features in the foreground or background of the image.

Further to the disclosed embodiments, at least one target 55 (e.g., flower) may be in the foreground of image 50, while background objects 53 (e.g., mountain 53C, hill 53B, and ground 53A) may be in the background 52 of image 50. To generate a partially-burred image that highlights target 55 of image 50, the target 55 may be designated prior to capturing the image 50. Alternatively, image 50 may be obtained and the target 55 may be identified afterwards (e.g., from post-processing a previously captured image). The target 55 may be an object or feature in image 50 that will be highlighted or otherwise be presented in-focus, while other objects or features 53, including those in the background 52, are blurred. This results in a partially-blurred image with the target 55 presented in sharp resolution and other features presented as blurred, out-of-focus features. An exemplary process of partially blurring an image 50 that may be used with the disclosed embodiments is described below.

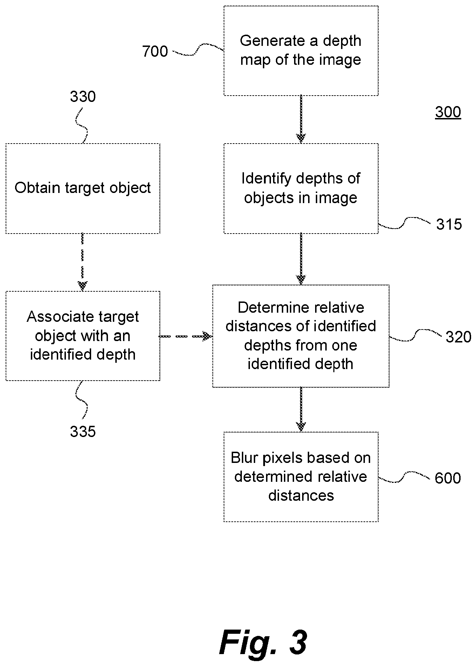

Fig. 3 is a flow chart representing an exemplary method 300 of partially blurring an image 50 having a first set of pixels 51. The method 300 may first obtain a plurality of images for processing. The plurality of images may include image 50, where image 50 is obtained from image capture device 113 of movable object 110. Alternatively, the plurality of images may include one or more images otherwise received (e.g., from an external source) or retrieved (e.g., from memory) for processing. In a preferred embodiment, the method 300 includes processing at least two images that include like-features in each of the images. The method 300 may be performed wholly or partially by processor 137 of movable object 110, by processor 167 of terminal 168, and/or using any other processors configured to perform the partial-blurring technique described herein.

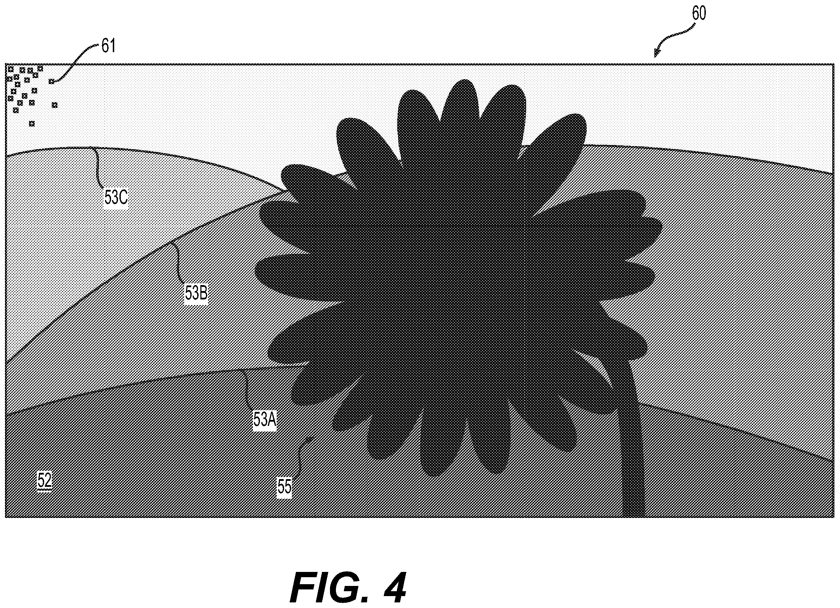

After obtaining the plurality of images to be processed, a depth map 60 is generated (Step 700) from the images. Using the first set of pixel values in each of the plurality of images, a depth map 60 is created including a second set of pixel values representing distances of objects in the plurality of images. Each of the second set of pixels 61 in the depth map 60 preferably corresponds to a respective pixel at the same position in the first set of pixels 51 in image 50. An exemplary depth map 60 is shown in Fig. 4, where different gray-scale pixel values represent distances of objects and features in the image from the image capture device 113. Those skilled in the art will understand that other representations of a depth map 60 may be used in accordance with the disclosed embodiments. In this example, pixel values corresponding to objects closer to the image capture device are assigned darker colors in depth map 60 than objects that are further away from the image capture device. In this manner, the second set of pixels values in depth map 60 represent depths of objects, including, for instance, the depths of target 55 (e.g., flower) and background objects 53 (e.g., mountain 53C, hill 53B, and ground 53A) in background 52 of image 50. The depths may be used to determine relative distances between each object (e.g., between target 55 and background objects 53 of image 50), which are then used to determine how the first set of pixels of the image may be blurred, e.g., such that a certain amount of random or pseudo-random noise may be added to a pixel value to create a blurring effect for that pixel value.

Fig. 4 provides an exemplary depth map 60 generated in Step 700. A visual representation of depth map 60 includes depths being presented as a grayscale image, with dark areas corresponding to objects and features that are closer than lighter areas. As shown, target 55 of image 50 is presented in depth map 60 in dark color, while features 53 in background 52 are presented as lighter objects. The lighter the object, the farther away the feature is from the image capture device used to obtain the image. In image 50, the background terrain (e.g., features 53) are lighter than the target 55, and the sky above the background terrain is lighter still. Each pixel in the second set of pixels 61 in depth map 60 includes a pixel value representing a depth. The pixel values are used to identify depths of objects in the image based on a grouping of pixels into groups having shared or similar pixel values. From the groups and the identified objects, the image is blurred according to relative distance between identified objects.

After the depth map 60 is generated (Step 700), the depths of objects in the image may be identified (Step 315). In one embodiment, the depth map may be analyzed for pixels 61 having similar depths, and pixels 61 with shared or similar depths identified as objects in the image. Analysis of the depths may include a statistical analysis of the pixel values, and/or a graphical or numerical representation of the pixel values. In an exemplary embodiment, the pixels values of the depth map may be grouped into a plurality of groups. The groups may include pixel values having shared or similar values. In some embodiments, the groups may be selected based on a statistical analysis of the pixel values, a limit for the total number of groups to be generated, and/or a predetermined sensitivity or range for determining shared or similar pixel values. The groups may also be grouped using any suitable process recognized by those skilled in the art.

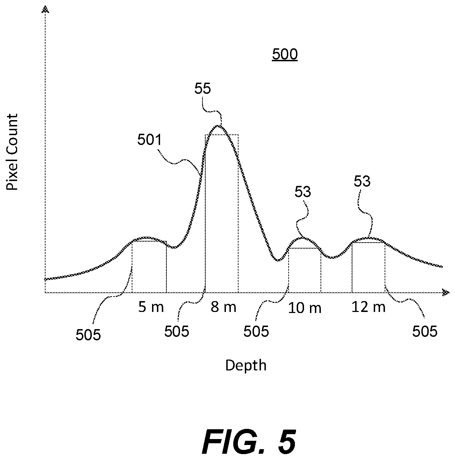

In one embodiment, the groups may be used to generate a histogram 500, charting the second set of pixel values in the depth map. An exemplary histogram 500 is shown in Fig. 5. The histogram 500 represents a distribution of the second pixel values, with pixel count on the Y-axis and the depths in the depth map 60 on the X-axis. The pixel count is represented by a data line 501. Although the data line 501 is shown as a smooth line, other histogram representations (e.g., bar graphs and the like) could also be used. In this example, each of the bars in the chart may represent a generated group of pixel values. The groups of pixel values may then be used to identify objects in the image (e.g., target 55 and other features 53 in image 50), which correspond to local maxima (i.e., local peaks) in the data line 501, which may be identified in Step 315 and assigned a bin 505 in the histogram. More generally, an object at a given distance from the image capture device will cause the depth map 60 to contain around the same pixel values (i.e., same depth) for the pixel positions corresponding to that object. Thus, relatively large pixel counts at discrete depths in the pixel values of the depth map should correspond to different objects located at those depths. By identifying these local peaks from the pixel values of the depth map and grouping the pixel values based on depth-map pixel counts, one or more different object depths may be identified. The groups and the pixel values may then be presented in a histogram as provided in Fig. 5.

Having identified different local peaks in the pixel value data, each peak may be grouped in a different group. The groups may then be used to determine the relative distance between one identified depth in the plurality of different depths (e.g., a target group) and each of the other identified depths in the plurality of different depths (e.g., the other groups). The relative distance between the groups may then be used to carry out a blurring process (Step 600). Represented graphically in the histogram 500, each group may be assigned a different bin 505. Each bin 505 may correspond to a cluster of pixels at a particular depth and representative of at least one object in the image at that particular depth. The bin 505, like the group, may correspond to a single depth or a range of depths. For example, if a peak in the histogram 500 is identified at a depth of 8 meters, then a corresponding bin 505 may be defined as a group of pixels having a depth of 8 meters plus or minus a predetermined amount or percentage. The histogram 500 may then be used to identify different depths for objects in the image 50, where the objects are identified from local maxima in the pixel value data and grouped into different depth groups. For example, where the ground, flower, hill, and mountain in the exemplary image 50 of Fig. 2 are located at 5, 8, 10, and 12 meters, respectively, these objects may correspond to groups also corresponding to the depths of 5, 8, 10, and 12 meters. As shown in the example of Fig. 5, the groups represented by bins 505 may be centered around each of the different depths identified based on the pixel value data from the depth map.

In some embodiments, the depths of objects may be identified (Step 315) using the groups generated from the pixel value data of the depth map. One or more groups may be generated before they are identified as an object in Step 315, and one or more objects may correspond to each group. The number of groups identified and used to identify objects will depend on the data presented in the pixel value data (e.g., the number of peaks in data line 501 of histogram 500) and how many different groups the user elects to use to discretize the data. In some instances, objects sharing a common depth may be grouped into a single depth, despite being discrete objects in the image. As will be described below, the number of groups, and correspondingly or alternatively the number of identified depths identified as objects in Step 315, will be used to determine the number of blurring iterations carried out in method 600. Therefore, the more objects identified in Step 315, the greater the computation time. However, more objects will account for more depths and may result in a more realistic blurring.

After the depths of different objects in the image have been identified (Step 315) from the pixel values of the depth map using a suitable statistical method and/or graphical or numerical representation of the pixel values, method 300 may proceed by either obtaining a target object 330 (Step 330) or by identifying one particular "target" depth at which objects should remain in focus. Then, the relative distances between each of the other identified depths and the target depths is determined (Step 320). To illustrate, assume the flower is the target object 55 corresponding to a target depth of 5 meters in the 5 meter group of histogram 500, and the other background objects of the ground, hill, and mountain correspond to groups at identified depths of 5, 10, and 12 meters, respectively. In this example, the relative distances, measured as an absolute value of the difference between identified depths, between the target depth of the flower (8 meters) and each of the other identified depths is: 3 meters for the ground (8 meters minus 5 meters), 2 meters for the hill (10 meters minus 8 meters), and 4 meters for the mountain (12 meters minus 8 meters).

At step 330, a target object optionally may be obtained from an external source or from identifying a target in at least one image stored in memory. The target object, for instance, may be target 55 of image 50. Once obtained, the target is associated (Step 335) with an identified depth from Step 315 (e.g., associated with a particular group). This optional branch of method 300 therefore relies on a stored target object or selected target object, either selected prior to obtaining or capturing the plurality of images, or selected after the plurality of images are captured and a target is designated during post-processing. A user from terminal 163 may select the target object using input devices 169, either before or after the images have been captured and/or obtained. Alternatively, rather than obtaining a target object in Step 330, the method 300 may proceed by automatically identifying the depths of objects in Step 315 to determine relative distances between one identified depth in the plurality of different depths. That is, an identified depth may be automatically selected from the pixel value data of the depth map. In either case (e.g., obtaining a target object to associate with a target depth or automatically identifying a target depth), the method 300 proceeds by determining relative distances between the target depth or the other identified depths in the pixel value data (Step 320).

Using the relative distances between identified depths (e.g., between a target and other features), the method 300 proceeds to blur pixels (Step 600) in the first set of pixels based on the relative distances determined in Step 320. For example, assume that pixels at an identified depth of 12 meters are to be blurred in accordance with the disclosed embodiments. In this case, pixel positions having pixel values corresponding to 12 meters (i.e., pixel values in bin 505 for 12 meters) are identified in the depth map 60, and those same pixel positions are blurred in the image 50, e.g., by adding a desired amount of random or pseudo-random noise to the pixel values being blurred in image 50. This blurring process can be repeated for blurring pixels in image 50 corresponding to different depths identified from histogram 500.

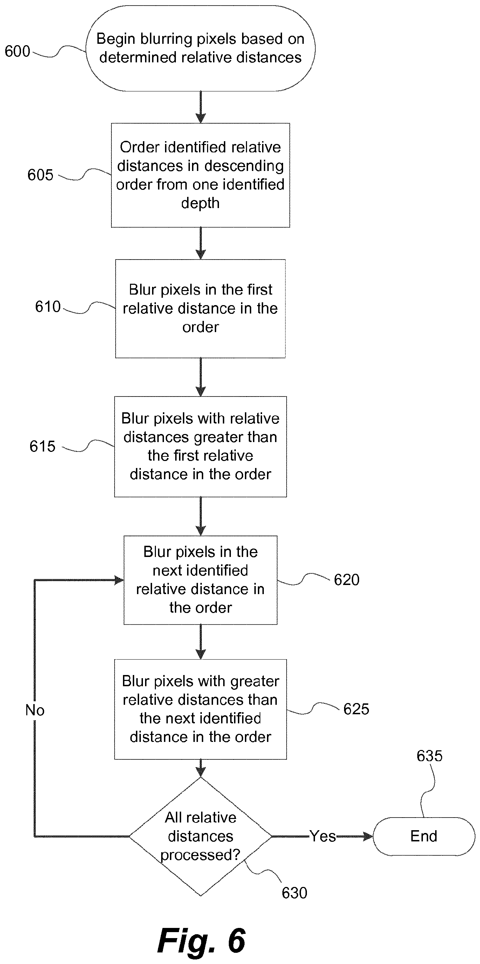

Fig. 6 is a flowchart outlining an exemplary embodiment of the blurring process (Step 600) after relative distances from the target depth are determined in Step 320. After relative distances between identified depths are known, the pixels associated with the identified relative distances for each depth may be ordered in descending order from farthest relative distance to closest relative distance as measured from the target depth (Step 605). Therefore, the identified depths farthest from the target depth are placed first in the order, and identified depths closer to the target depth are ordered after the farthest identified depth, based on their relative distance. The determined relative distance is calculated as an absolute value, and the order is not dependent on whether the identified depth is in front of, or behind, the target depth. More specifically, an identified depth in the foreground may be placed higher in the order if its relative distance to the target depth is greater than identified depths in the background.

By way of example and not limitation, consider again the example of the target depth of a flower at 8 meters, and the relative distances between the ground (3 meters away from the flower), hill (2 meters away from the flower), and mountain (4 meters away from the flower). In this example, the mountain's identified depth has the greatest relative distance from the flower's target depth, so pixels in image 50 corresponding to the mountain may be blurred first (as described below). The ground's identified depth is the next-farthest away from the flower, and pixels corresponding to the ground may be blurred second per the blurring process below. Finally, the hill has the closest relative distance to the flower and pixels corresponding to the hill may be blurred after blurring pixels for the mountain and ground in image 50.

In some embodiments, there may be different identified depths that are the same relative distance to the target depth. For example, if the target depth is 8 meters, then bins 505 corresponding to 5 meters and 11 meters would both have a relative distance of 3 meters. In such embodiments, the relative order of these different identified depths relative to each other may be arbitrarily chosen, e.g., such that pixels corresponding to 11 meters are blurred before pixels corresponding to 5 meters, or vice versa. In other embodiments where multiple identified depths have the same relative distance, there may be a preference to blur pixels in a specified order, e.g., from the farthest to nearest depths, as among these identified depths.

Once the identified distances are ordered in descending order, pixels in the first set of pixels are blurred iteratively and in the descending order from farthest relative distance to closest relative distance. Further to the disclosed embodiments, blurring occurs in pixels associated with the identified relative distances, as well as in pixels having a farther relative distance, for each iteration. More specifically, pixels in the first set of pixels associated with the first identified relative distance in the order are blurred first (Step 610). During this first blurring iteration (e.g., while blurring pixels at the first identified relative distance in the order), pixels with greater relative distances than the first identified depth in the order are also blurred (Step 615). Therefore, pixels at the relative distance in the order and those having greater relative distance from the target are blurred with each blurring iteration. The pixels having a greater relative distance may include pixels in the background (e.g., having a greater depth than the depth at the given iteration), and/or may include pixels in the foreground (e.g., having a shallower depth but greater relative distance from the depth at the given iteration).

After the first iteration is completed, the blurring process continues by blurring pixels in the next identified relative distance in the order (Step 620). Again, pixels with relative distances greater than the next identified depth in the order are blurred (Step 625) as pixels at the next identified relative distance are blurred. If all identified relative distances in the order have been blurred (Step 630, Yes), the blurring process ends (Step 635). That is, if the blurring iterations have completed, the process may end. If pixels corresponding to a relative distance in the order have not yet been blurred (Step 630, No), the process continues until all identified relative distances in the order are blurred and pixels with greater relative distances than each identified relative distance are blurred (e.g., the process continues until all iterations are complete). This process therefore blurs pixels according to their groupings, and blurs pixels of greater relative distance than the identified relative distance in each iteration. This results in a blurring method in which pixels in the first set of pixels in image 50 may be blurred multiple times using this illustrative iterative process, where the number of times may be determined based on the number of iterations (e.g., number of identified depths) and the relative distance of each pixel relative to the relative distance used in each iteration of the blurring process. This results a more realistic and progressive blurring of objects in the image, resulting in a more realistic representation of the target surrounding by blurred (e.g., out-of-focus) objects. Moreover, by using the groups to identify finite ranges of pixels to blur in an iterative approach, the blurring process repeats a finite number of times and the number of iterations can be controlled using more groups or fewer groups. More groups in the histogram creates more blurring iterations, and vice versa.

In one representative example, and referring to Fig. 5, different depths of objects in image 50 may be identified from identified groups, represented as bins 505 in histogram 500. From peaks in the pixel value data, represented by data line 501, objects may be identified and assigned depths of 5 meters, 8 meters, 10 meters, and 12 meters. These depths may correspond to one or more features 53 and target 55 in image 50. The target 55 may be associated with the 8 meter object (e.g., the group represented as the 8 meter bin 505 in histogram 500). Once identified, the relative distances between the target at 8 meters and the other identified objects may be determined. In this example, the relative distances correspond to the absolute value of distances between the 8 meter target and the 5, 10, and 12 meter objects. The resulting distances are calculated as follows: |5 m - 8 m|= 3 m, |10 m - 8 m| = 2 m, |12 m - 8 m| = 4 m. Therefore, the relative distances of groups of pixels corresponding to the identified objects to the group of pixels corresponding to the target 55 are therefore 3, 2, and 4 meters.

Next, the determined relative distances may be ordered in descending order, from farthest distance to shortest distance, and pixels corresponding to those depths are blurred in that order, together with pixels having greater relative depths with each iteration. Moreover, because three objects and one target were identified from the grouping of pixel value data, the blurring algorithm will proceed with three blurring iterations. Blurring proceeds for pixels having relative distances greater than or equal to each distance in the order. First, blurring is applied to pixels at a relative distance of 4 meters (|12 m - 8 m| = 4 m). In one embodiment, pixels corresponding to this relative distance may be both behind and in front of the target object (e.g., those with relative distances equal to or greater than the target at 4 meters). This embodiment blurs objects in front of and behind the target object. In other embodiments, the blurring may proceed only for those pixels having greater depths (e.g., pixels behind the object). This embodiment blurs objects only behind the target object.

Once this iteration is complete, the blurring then proceeds in descending order after pixels associated with the first relative distance are blurred. In the example, pixels associated with relative distances of 3 meters or greater are blurred (|5 m - 8 m|= 3 m). Then pixels associated with relative distances of 2 meters or greater are blurred (|10 m - 8 m| = 2 m). Therefore, the farther an object is relative to the target, the more times the pixel is blurred and therefore the less in focus (e.g., more blurry) the object may appear in the processed image. This is compared to objects closer to the target, which are blurred fewer times and thus are more in focus (e.g., less blurry) than objects farther from the target object. The pixels are blurred iteratively and consecutively to produce a gradual, progressive blurring from the target (presented in sharp focus) to the background and foreground elements (presented in as blurred and out-of-focus).

The pixels blurred in each iteration may be blurred to the same degree, or may be blurred progressively based on the relative distance of each pixel. For each iteration of blurring, a progressive blurring may apply greater blurring to pixels with greater relative distances from the target object as compared to those having closer relative distances. This blurs objects farther from the target object more than objects closer to the target for each blurring iteration. Alternatively, for each pixel in the identified relative distance in the order and pixels of greater relative distance, each pixel may be blurred equally and to the same degree in each iteration. The progressive approach requires greater computation time, and may proceed by applying blurring linearly as the pixel distances increase relative to the identified target.

In one embodiment, the pixels corresponding to each identified relative distance and those of greater relative distance (e.g. those pixels for each iteration of blurring) may be grouped as layers in the image. The layers may then be blurred consecutively based on their respective identified relative distance and the identified order. Pixels may be grouped into more than one layer, and the blurring may be applied equally or progressively when blurring each layer. The blurring applied to each layer or each pixel in the first set of pixels may include any known blurring or filtering function in image processing, such Gaussian blurring, etc.

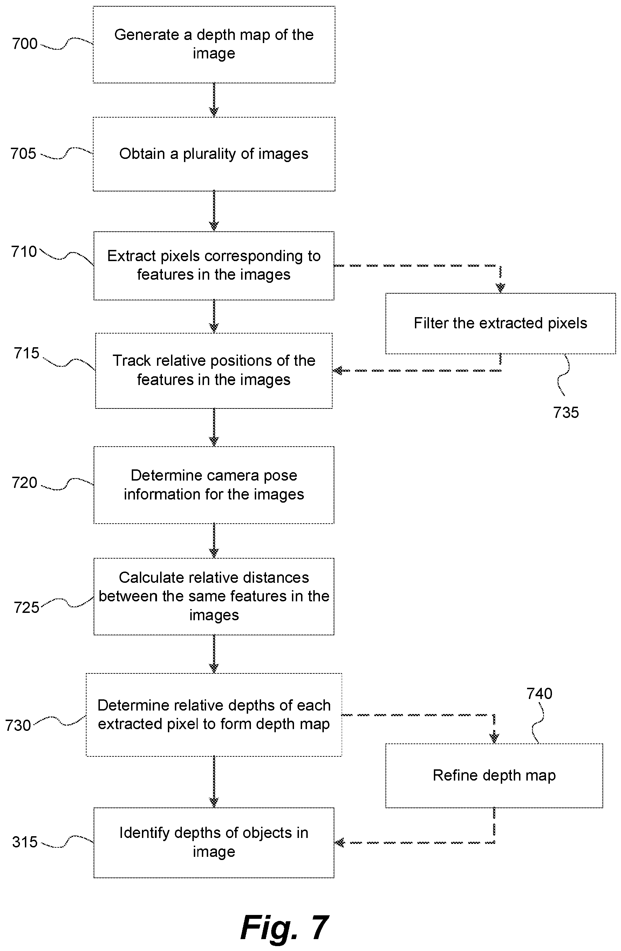

Referring now to Fig. 7, a flowchart is provided that details an embodiment of the method for generating the depth map 60 in Step 700. The method proceeds by first obtaining a plurality of images (Step 705). The images may be captured by image capture device 113 of movable object 110, or otherwise be obtained (e.g., from memory 136, memory 166, or from a third-party source). The plurality of images may include several images that capture a particular scene, where the scene includes the same or like-features from different perspectives or angles. The image capture device 113 or source of capturing the images may move between the plurality of images. The different perspectives of the like-features are used to generate the depth map 60 without requiring a stereo camera or 3D camera (e.g., requiring only a single lens, monocular, or 2D camera).

Once the plurality of images are obtained in Step 705, the method proceeds by extracting pixels corresponding to features in a plurality of images (Step 710). Features are extracted using a corner detection technique, including FAST (Features from Accelerated Segment Test), SUSAN, Harris, etc. In one embodiment, features may be extracted using Harris Corner detection. Using this technique and as presented in the equation below, a matrix (A) is defined as a structure tensor, $I_x$ and $I_y$ are points on each image, and the gradient information is in the x and y directions. In the disclosed embodiments, the extracted features may correspond to at least one of an inflection point, one or more points of an object contour, or any other features that may be extracted from images as would be recognized by those skilled in the art.

$$A = \sum_u \sum_v w(u,v) \begin{bmatrix} I_x^2 & I_x I_y \\ I_x I_y & I_y^2 \end{bmatrix} = \begin{bmatrix} \langle I_x^2 \rangle & \langle I_x I_y \rangle \\ \langle I_x I_y \rangle & \langle I_y^2 \rangle \end{bmatrix}$$

Using a function ($M_c$), presented below, a threshold $M_n$ is defined. When $M_c$ is greater than $M_n$, a feature point is determined in the image. For the function $M_c$, det(A) is the determinant of matrix A, trace (A) is the trace of matrix A, and kappa is a tunable sensitivity parameter.

$$M_c = \lambda_1 \lambda_2 - \kappa (\lambda_1 + \lambda_2)^2 = \det(A) - \kappa \, \mathrm{trace}^2(A)$$

Once feature points are extracted for each of the plurality of images in Step 710, the relative positions of the extracted features can be tracked in the plurality of images in Step 715. However, before tracking feature points, the feature points extracted in Step 710 may be filtered in Step 735. If too many feature points are extracted from the images, a filter may be applied to reduce the feature point count. This may be accomplished by adjusting the sensitivity parameter to reduce the number of features extracted. Filtering the extracted features to reduce the count reduces computation time. Once filtered, or if filtering is not elected, like-features that have been extracted are tracked across the plurality of images in Step 715.

The features are tracked in order to calculate movement or optical flow across the plurality of images. Since the plurality of images may be taken or captured from different angles and positions, the features may present differently in each image. Tracking extracted features allows like-features to be identified in different images, from which the depth of each feature in each image can be calculated. When tracking features, KLT (Kanade-Lucas-Tomasi) is one exemplary algorithm that may be employed. For each extracted feature point, the following formula may be used, in which (h) is the displacement of the a feature's position F(x) between two images, where the feature's second position is G(x) = F(x + h).

$$\begin{cases} h_0 = 0 \\ h_{k+1} = h_k + \dfrac{\sum_x w(x) F'(x + h_k) [G(x) - F(x + h_k)]}{\sum_x w(x) F'(x + h_k)^2} \end{cases}$$

In the embodiment using KLT, the above equation is used in an iterative process to obtain displacement (h) of feature points between consecutive images. The displacement calculated can be confirmed by reversing the calculation once the displacement is known. That is, the displacement may be applied to the position G(x) in the second image to verify that the feature point returns to its original position F(x) in the first image. By satisfying this relationship, the displacement is confirmed and the tracking is verified.

Once the features are extracted in Step 710 and tracked in Step 715, the method may continue by determining camera pose information for each of the plurality of images (Step 720). That is, the relative 3D position of each extracted feature point is determined in the plurality of images. In one embodiment, bundle adjustment may be employed to determine camera pose for each of the images. Camera pose is determined for each image based on position data associated with each image. In one embodiment, position device 146 and sensors 119 provide position and attitude information as image capture device 113 captures each image and moves between each image. The position and attitude of the image capture device 113 (e.g., the camera) is therefore associated with each captured image. With this information in conjunction with bundle adjustment, camera pose information for each of the plurality of images can be determined. In the formula below for bundle adjustment, (n) is the number of 3D feature points in (m) number of images (e.g., (n) number of 3D points capable of being continuously tracked in (m) number of consecutive images).

$$\min_{\mathbf{a}_j, \mathbf{b}_i} \sum_{i=1}^{n} \sum_{j=1}^{m} v_{ij}\, d(\mathbf{Q}(\mathbf{a}_j, \mathbf{b}_i),\, \mathbf{x}_{ij})^2.$$

Once camera pose information is determined, the relative distances between the like-features in the plurality of images (e.g., the same features in the plurality of images) can be calculated (Step 725), and relative depth information can be obtained for each extracted pixel to form the depth map in Step 730. In one embodiment, a plane sweeping algorithm can be applied to calculate the depth of each feature. The 3D relative position of each feature is calculated using the Bundle Adjustment applied in Step 720. Using a plane sweeping algorithm and transforming each feature point onto a projection, relative distances can be calculated for each feature and determined for each pixel. The relative distances may then be calculated using any number of methods, including Mean Absolute Differences, Sum of Squared Differences, Sum of Absolute Difference, Normalized Cross Correlation, Sequential Similarity Detection Algorithm, or Sum of Absolute Transformed Difference.

Once the relative distances are calculated and the relative depths are determined for each pixel, the depth map 60 can be generated (Step 700). From the depth map 60, groups of pixels corresponding to objects may be identified (Step 315) using a statistical process that may include grouping the pixel value data of the depth map. Alternatively, the depth may 60 may be refined (Step 740) prior to identifying the depths of objects in the image (Step 315). The depth map may be refined in Step 740 to sharpen features detected in Step 710 using Kruskal's algorithm, a minimum-spanning-tree algorithm. In one embodiment, a cost function according to the following equation may be utilized when defining the minimum-spanning-tree.

$$C_d^A(p) = \sum_q S(p,q) C_d(q) = \sum_q exp\left(-\frac{D(p,q)}{\sigma}\right) C_d(q).$$

Where:

$$C_d^{new}(p) = \begin{cases} |d - D(p)| & p \text{ is stable and } D(p) > 0, \\ 0 & \text{else.} \end{cases}$$

Using the minimum-spanning-tree algorithm, pixels of similar depths can be determined and the depth map may be refined to sharpen each feature such that features are more pronounced in the pixel value data of the depth map.

In addition to sharpening features, the depth map may be refined by removing distortion from the depth map. Based on the 3D information of each pixel of the plurality of images, transformations can be applied to each point in the depth map to eliminate unnatural perspective or other distortion created when capturing images using a 2D camera. The transformation adjusts the depths of the pixels in the depth map according to a selected focal point and a projection plane. This may be accomplished by converting the depth map into a 3D point cloud, applying a transformation matrix to the point cloud (e.g., performing one or more rotations to every point in the point cloud), and projecting the point cloud to remove distortion. This allows the blurring to be performed from a selected perspective among the plurality of images, and eliminates unnatural distortion of objects in the blurred image.

The distorted images here may include the images captured by Tilt-shift photography, which is often used for simulating a miniature scene. Removing distortion includes rotation and transformation of the pixels of the distorted images.

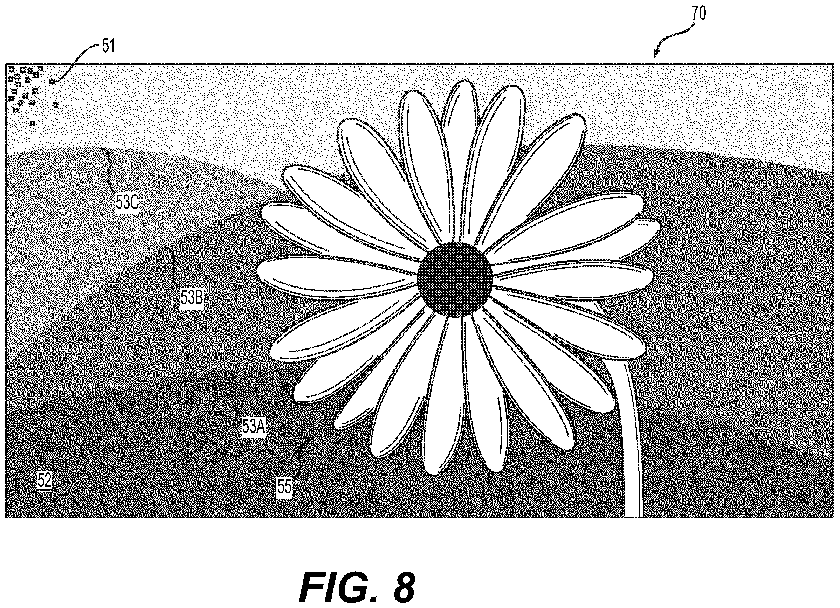

Once the pixels have been blurred based on the pixel value data of the depth map and the relative distances from the target object, a processed image 70 may be generated. Referring to Fig. 8, the processed image 70 includes the target 55 in sharp resolution (e.g., in focus), while other features 53 in the image are blurred (e.g., out-of-focus) based on their relative depth to the target 55. The first set of pixels are altered from their original value, providing an image that includes both blurred portions and sharp portions to present a realistic gradient or progressive blurring of features based on depth.

In addition, the processed image 70 may include a partially-blurred 2D image from a selected perspective, or the processed image 70 may include a partially-blurred 3D image that blurs features based on a selectable perspective that can be chosen and altered by a viewing user. 3D images provide a movable view of the target 55 within a selected range. The target can be viewed from different perspectives or vantage points and the image is dynamically rotated about the target 55. The partially-blurred portions of the 3D processed image update with each perspective available to the user to correspond with the changing feature depths as the user's perspective changes relative to the target.

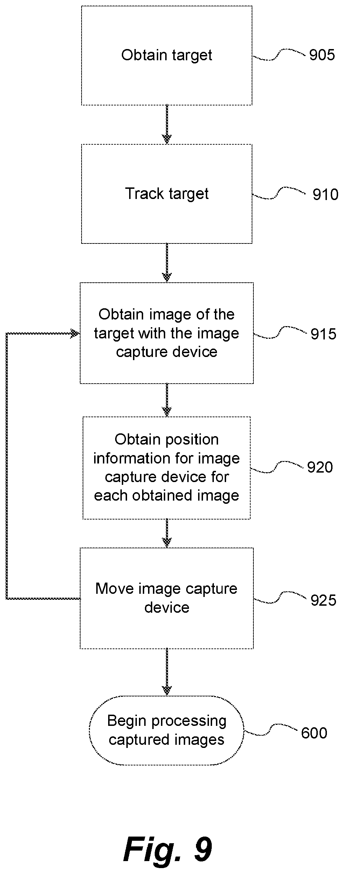

Referring now to Fig. 9, there is shown additional steps in a method for tracking a target and obtaining a plurality of images of the target for post-processing (e.g., for generated a partially-blurred 2D or 3D image). First, a target is obtained in Step 905. The target is obtained in one or more ways. These include, but are not limited to, obtaining a target from a user via terminal 163, obtaining a target from memory 136 or 166, or by automatically identifying an object in the field of view of image capture device 113 using processor 137 or 167. The target may a particular object, or the target may be a scene, location, or point of view desired to be imaged. The target in Step 905 may or may not be the exact target 55 designated in the image to be processed. However, target 55 may be in the target field of view obtained in Step 905.

After a target is obtained in Step 905, the image capture device 113 tracks the target (Step 910). Target tracking may be accomplished by an image capture device 113 on movable object 110, where the flight control module 140 or 182 controls movable object 110 and image capture device 110 maintains the obtained target in its field of view. The target may be tracked as movable object 110 and/or image capture device 113 are moved. Therefore, image capture device 113 view the obtained target from one or more perspectives as it moves.

As the target is tracked in Step 910, image capture device 113 obtains images of the target in Step 915. The image capture device 113 may obtain several images and continue capturing images as it moves relative to and tracks the target. With each image, position information is obtained in Step 920 and is associated with each image. This allows camera pose data to be determined during post-processing. Position data may be obtained using sensors 119, positioning device 146, or any other means of obtaining the position and attitude of image capture device 113 as it obtains images of the target.

In order to generate the partially-blurred image and/or 3D image, images from more than one position may be necessary if image capture device 113 includes a 2D camera or monocular lens. Therefore, after each image is captured in Step 920, the image capture device 113 moves (Step 925) before capturing a subsequent image. The image capture device 113 may move on its gimbal, or movable object 110 carrying image capture device 113 may move between image captures. This allows a first image to be captured at a first location, and a second image captured at a second location, and so on. The plurality of images are then post-processed according to the method 300 outlined in Fig. 3 to generated the partially-blurred image

Computer programs based on the written description and methods of this specification are within the skill of a software developer. The various programs or program modules may be created using a variety of programming techniques. For example, program sections or program modules may be designed in or by means of Java, C, C++, assembly language, or any such programming languages. One or more of such software sections or modules may be integrated into a computer system, non-transitory computer readable media, or existing communications software.

**Claims**

1. A computer-implemented method of processing an image (50) having a first set of pixels (51), the method comprising:

    generating a depth map (60) of the image (50), the depth map (60) including a second set of pixel (61) values representative of distances of objects (53, 55) in the image (50);identifying a plurality of different depths at which objects are located in the image (50) based on the depth map (60);
    using the depth map (60) to determine a relative distance between one identified depth in the plurality of different depths and each of the other identified depths in the plurality of different depths;
    ordering the second set of pixel (61) values associated with the determined relative distance for each depth in a descending order from a farthest relative distance to a closest relative distance as measured from the identified depth; and blurring
    pixels in the first set of pixels (51) based on each determined relative distance,
    wherein the pixels in the first set of pixels (51) are iteratively blurred in the descending order from a farthest relative distance to a closest relative distance, wherein, for each iteration, blurring the pixels in the first set of pixels occurs in pixels associated with one determined relative distance and in pixels having a farther relative distance to the one determined relative distance.

2. The method of claim 1, further comprising:

    grouping the second set of pixel (61) values of the depth map (60) into a plurality of groups; and
    identifying the plurality of different depths at which objects are located in the image (50) based on the groups.

3. The method according to claim 2, wherein identifying the plurality of different depths at which objects are located in the image (50) comprises:

Using the groups to generate a histogram (500), charting the second set of pixel (61) values in the depth map (60), identifying the objects depth by identifying local peaks from the pixel values of the depth map (60) and grouping the pixel values based on the depth map (60) pixel count.

4. The method of claim 2, further comprising:

using the groups to determine the relative distance between one identified depth in the plurality of different depths and each of the other identified depths in the plurality of different depths; and
blurring the pixels in the first set of pixels (51) based on each relative distance determined using the groups.

5. The method of claim 1, wherein when pixels corresponding to a particular identified depth are blurred, pixels corresponding to any identified depths having a greater relative distance to the one identified depth are also blurred.

6. The method of claim 1, further comprising:

obtaining a plurality of images (50); and
calculating the depth map (60) from the plurality of images (50).

7. The method of claim 6, wherein calculating the depth map (60) further comprises:

extracting pixels corresponding to features in a plurality of images (50);
tracking relative positions of the features in the plurality of images (50);
determining camera pose information for the plurality of images (50);
calculating relative distances between the same features in the plurality of images (50); and
determining, for each extracted pixel, a relative depth based on the relative distances between the features.

8. The method of claim 7, wherein the features in the plurality of images (50) further comprise at least one of an inflection point or a point of an object contour.

9. The method of claim 7, further comprising refining the depth map (60) by removing distortion in the image (50) before identifying the plurality of different depths at which objects are located,
wherein refining the depth map (60) by removing distortion further comprises performing
a transformation on each pixel.

10. The method of claim 1, further comprising refining the depth map (60) by sharpening edges in the plurality of images (50) before identifying the plurality of different depths at which objects are located.

11. The method of claim 1, wherein the unmanned aerial vehicle includes a payload (114) including one or more image capture devices (113),
the method further comprising:

controlling the one or more image capture devices to track a target; and
obtaining images (50) of the target from the image capture device, the images (50) comprising a first image captured at a first location and a second image captured at a second location.

12. The method of claim 11, further comprising:

identifying the target from the obtained images (50); and
associating the target with the one identified depth in the plurality of different depths.

13. A system for processing an image (50) having a first set of pixels (51), the system comprising:

a memory (136) having instructions stored therein; and
one or more processors (137) configured to execute the instructions to:

generate a depth map (60) of the image (50), the depth map (60) including a second set of pixel (61) values representative of distances of objects in the image (50);

identify a plurality of different depths at which objects are located in the image (50) based on the depth map (60);

use the depth map (60) to determine a relative distance between one identified depth in the plurality of different depths and each of the other identified depths in the plurality of different depths;

order the second set of pixel (61) values associated with the determined relative distance for each depth in a descending order from a farthest relative distance to a closest relative distance as measured from the identified depth; and

blur pixels in the first set of pixels (51) based on each determined relative distance, wherein the pixels in the first set of pixels (51) are iteratively blurred in the descending order from a farthest relative distance to a closest relative distance, wherein, for each iteration, blurring the pixels in the first set of pixels occurs in pixels associated with one determined relative distance and in pixels having a farther relative distance to the one determined relative distance..

14. A non-transitory computer readable medium storing instructions that, when executed by at least one processor (137), perform the operations of the method of any one of claims 1 to 12.

**Patentansprüche**

1. Computerimplementiertes Verfahren zum Verarbeiten eines Bildes (50) mit einem ersten Satz von Pixeln (51), wobei das Verfahren Folgendes umfasst:

Erzeugen einer Tiefenkarte (60) des Bildes (50), wobei die Tiefenkarte (60) einen zweiten Satz von Pixel(61)-Werten beinhaltet, die Abstände von Objekten (53, 55) im Bild (50) repräsentieren;

Identifizieren einer Vielzahl von verschiedenen Tiefen, in denen sich Objekte im Bild (50) befinden, auf Basis der Tiefenkarte (60);

Verwenden der Tiefenkarte (60), um einen relativen Abstand zwischen einer identifizierten Tiefe in der Vielzahl von verschiedenen Tiefen und jeder der anderen identifizierten Tiefen in der Vielzahl von verschiedenen Tiefen zu bestimmen;

Sortieren des zweiten Satzes von Pixel(61)-Werten, die mit dem bestimmten relativen Abstand verknüpft sind, für jede Tiefe in einer absteigenden Reihenfolge von einem weitesten relativen Abstand zu einem nächsten relativen Abstand, wie von der identifizierten Tiefe gemessen; und

Verunschärfen von Pixeln im ersten Satz von Pixeln (51) auf Basis von jedem bestimmten relativen Abstand,

wobei die Pixel im ersten Satz von Pixeln (51) in der absteigenden Reihenfolge von einem weitesten relativen Abstand zu einem nächsten relativen Abstand wiederholt verunschärft werden, wobei für jede Wiederholung das Verunschärfen der Pixel im ersten Satz von Pixeln bei Pixeln, die mit einem bestimmten relativen Abstand verknüpft sind, und bei Pixeln, die einen weiteren relativen Abstand als der bestimmte relative Abstand aufweisen, erfolgt.

2. Verfahren nach Anspruch 1, das ferner Folgendes umfasst:

Gruppieren des zweiten Satzes von Pixel(61)-Werten der Tiefenkarte (60) zu einer Vielzahl von Gruppen und Identifizieren der Vielzahl von verschiedenen Tiefen, in denen sich Objekte im Bild (50) befinden, auf Basis der Gruppen.

3. Verfahren nach Anspruch 2, wobei das Identifizieren der Vielzahl von verschiedenen Tiefen, in denen sich Objekte im Bild (50) befinden, Folgendes umfasst:

Verwenden der Gruppen, um ein Histogramm (500) zu erzeugen, Eintragen des zweiten Satzes von Pixel(61)-Werten in die Tiefenkarte (60),

Identifizieren der Objekttiefe durch Identifizieren von lokalen Spitzen von den Pixelwerten der Tiefenkarte (60) und Gruppieren der Pixelwerte auf Basis der Pixelzählung der Tiefenkarte (60).

4. Verfahren nach Anspruch 2, das ferner Folgendes umfasst:

Verwenden der Gruppen, um den relativen Abstand zwischen einer identifizierten Tiefe in der Vielzahl von verschiedenen Tiefen und jeder der anderen identifizierten Tiefen in der Vielzahl von verschiedenen Tiefen zu bestimmen; und
Verunschärfen der Pixel im ersten Satz von Pixeln (51) auf Basis von jedem relativen Abstand, der unter Verwendung der Gruppen bestimmt wurde.

5.  Verfahren nach Anspruch 1, wobei, wenn Pixel, die einer speziellen identifizierten Tiefe entsprechen, unscharf sind, Pixel, die beliebigen identifizierten Tiefen entsprechen, die einen größeren relativen Abstand zu der einen identifizierten Tiefe aufweisen, ebenfalls unscharf sind.

6.  Verfahren nach Anspruch 1, das ferner Folgendes umfasst:

    Erhalten einer Vielzahl von Bildern (50) und
    Berechnen der Tiefenkarte (60) aus der Vielzahl von Bildern (50) .

7.  Verfahren nach Anspruch 6, wobei das Berechnen der Tiefenkarte (60) ferner Folgendes umfasst:

    Extrahieren von Pixeln, die Merkmalen in einer Vielzahl von Bildern (50) entsprechen;
    Verfolgen von relativen Positionen der Merkmale in der Vielzahl von Bildern (50);
    Bestimmen von Kameraposeninformationen für die Vielzahl von Bildern (50);
    Berechnen von relativen Abständen zwischen denselben Merkmalen in der Vielzahl von Bildern (50) und
    Bestimmen einer relativen Tiefe auf Basis der relativen Abstände zwischen den Merkmalen für jedes extrahierte Pixel.

8.  Verfahren nach Anspruch 7, wobei die Merkmale in der Vielzahl von Bildern (50) ferner mindestens eines von einem Wendepunkt oder einem Punkt einer Objektkontur umfassen.

9.  Verfahren nach Anspruch 7, das vor dem Identifizieren der Vielzahl von verschiedenen Tiefen, in denen sich Objekte befinden, ferner das Verfeinern der Tiefenkarte (60) durch Entfernen einer Verzerrung im Bild (50) umfasst, wobei das Verfeinern der Tiefenkarte (60) durch Entfernen einer Verzerrung ferner das Durchführen einer Umwandlung an jedem Pixel umfasst.

10. Verfahren nach Anspruch 1, das vor dem Identifizieren der Vielzahl von verschiedenen Tiefen, in denen sich Objekte befinden, ferner das Verfeinern der Tiefenkarte (60) durch Schärfen von Kanten in der Vielzahl von Bildern (50) umfasst.

11. Verfahren nach Anspruch 1, wobei das unbemannte Luftfahrzeug eine Nutzlast (114) beinhaltet, die eine oder mehrere Bilderfassungsvorrichtungen (113) beinhaltet,
    wobei das Verfahren ferner Folgendes umfasst:

    Steuern der einen oder der mehreren Bilderfassungsvorrichtungen, um ein Ziel zu verfolgen; und
    Erhalten von Bildern (50) des Ziels von der Bilderfassungsvorrichtung, wobei die Bilder (50) ein erstes Bild, das an einem ersten Ort erfasst wurde, und ein zweites Bild, das an einem zweiten Ort erfasst wurde, umfassen.

12. Verfahren nach Anspruch 11, das ferner Folgendes umfasst:

    Identifizieren des Ziels von den erhaltenen Bildern (50) und
    Verknüpfen des Ziels mit der einen identifizierten Tiefe der Vielzahl von verschiedenen Tiefen.

13. System zum Verarbeiten eines Bildes (50) mit einem ersten Satz von Pixeln (51), wobei das System Folgendes umfasst:

    einen Speicher (136), in dem Anweisungen gespeichert sind; und
    einen oder mehrere Prozessoren (137), die dazu ausgelegt sind, die Anweisungen auszuführen, um Folgendes durchzuführen:

        Erzeugen einer Tiefenkarte (60) des Bildes (50), wobei die Tiefenkarte (60) einen zweiten Satz von Pixel(61)-Werten beinhaltet, die Abstände von Objekten im Bild (50) repräsentieren;
        Identifizieren einer Vielzahl von verschiedenen Tiefen, in denen sich Objekte im Bild (50) befinden, auf Basis der Tiefenkarte (60);

Verwenden der Tiefenkarte (60), um einen relativen Abstand zwischen einer identifizierten Tiefe in der Vielzahl von verschiedenen Tiefen und jeder der anderen identifizierten Tiefen in der Vielzahl von verschiedenen Tiefen zu bestimmen;

Sortieren des zweiten Satzes von Pixel(61)-Werten, die mit dem bestimmten relativen Abstand verknüpft sind, für jede Tiefe in einer absteigenden Reihenfolge von einem weitesten relativen Abstand zu einem nächsten relativen Abstand, wie von der identifizierten Tiefe gemessen; und

Verunschärfen von Pixeln im ersten Satz von Pixeln (51) auf Basis von jedem bestimmten relativen Abstand, wobei die Pixel im ersten Satz von Pixeln (51) in der absteigenden Reihenfolge von einem weitesten relativen Abstand zu einem nächsten relativen Abstand wiederholt verunschärft werden, wobei für jede Wiederholung das Verunschärfen der Pixel im ersten Satz von Pixeln bei Pixeln, die mit einem bestimmten relativen Abstand verknüpft sind, und bei Pixeln, die einen weiteren relativen Abstand als der bestimmte relative Abstand aufweisen, erfolgt.

14. Nichttransitorisches computerlesbares Medium, auf dem Anweisungen gespeichert sind, die, wenn sie von mindestens einem Prozessor (137) ausgeführt werden, die Operationen des Verfahrens nach einem der Ansprüche 1 bis 12 durchführen.

**Revendications**

1. Procédé mis en œuvre par ordinateur pour traiter une image (50) présentant un premier ensemble de pixels (51), le procédé comprenant les étapes ci-dessous consistant à :

générer une carte de profondeur (60) de l'image (50), la carte de profondeur (60) incluant un second ensemble de valeurs de pixels (61) représentatives de distances d'objets (53, 55) dans l'image (50) ;
identifier une pluralité de profondeurs distinctes auxquelles des objets sont situés dans l'image (50), sur la base de la carte de profondeur (60) ;
utiliser la carte de profondeur (60) en vue de déterminer une distance relative entre une profondeur identifiée dans la pluralité de profondeurs distinctes et chacune des autres profondeurs identifiées dans la pluralité de profondeurs distinctes ;
ordonner le second ensemble de valeurs de pixels (61) associées à la distance relative déterminée pour chaque profondeur, dans un ordre décroissant, d'une distance relative la plus éloignée à une distance relative la plus proche telle que mesurée à partir de la profondeur identifiée ; et
flouter des pixels dans le premier ensemble de pixels (51) sur la base de chaque distance relative déterminée ;
dans lequel les pixels dans le premier ensemble de pixels (51) sont floutés de manière itérative dans l'ordre décroissant d'une distance relative la plus éloignée à une distance relative la plus proche, dans lequel, pour chaque itération, l'étape de floutage des pixels dans le premier ensemble de pixels se produit dans des pixels associés à une distance relative déterminée et dans des pixels présentant une distance relative plus éloignée jusqu'à la distance relative déterminée.

2. Procédé selon la revendication 1, comprenant en outre les étapes ci-dessous consistant à :

regrouper le second ensemble de valeurs de pixels (61) de la carte de profondeur (60) en une pluralité de groupes ; et
identifier la pluralité de profondeurs distinctes auxquelles des objets sont situés dans l'image (50) sur la base des groupes.

3. Procédé selon la revendication 2, dans lequel l'étape d'identification de la pluralité de profondeurs distinctes auxquelles des objets sont situés dans l'image (50) comprend les étapes ci-dessous consistant à :

utiliser les groupes pour générer un histogramme (500), représentant graphiquement le second ensemble de valeurs de pixels (61) dans la carte de profondeur (60) ;
identifier la profondeur d'objets en identifiant des pics locaux à partir des valeurs de pixels de la carte de profondeur (60) et regrouper les valeurs de pixels sur la base d'un comptage de pixels de la carte de profondeur (60).

4. Procédé selon la revendication 2, comprenant en outre les étapes ci-dessous consistant à :

**EP 3 488 603 B1**

utiliser les groupes en vue de déterminer la distance relative entre une profondeur identifiée dans la pluralité de profondeurs distinctes et chacune des autres profondeurs identifiées dans la pluralité de profondeurs distinctes ; et
flouter les pixels dans le premier ensemble de pixels (51) sur la base de chaque distance relative déterminée en utilisant les groupes.

**5.** Procédé selon la revendication 1, dans lequel, lorsque des pixels correspondant à une profondeur identifiée particulière sont floutés, des pixels correspondant à des quelconques profondeurs identifiées présentant une distance relative supérieure à la profondeur identifiée sont également floutés.

**6.** Procédé selon la revendication 1, comprenant en outre les étapes ci-dessous consistant à :

obtenir une pluralité d'images (50) ; et
calculer la carte de profondeur (60) à partir de la pluralité d'images (50).

**7.** Procédé selon la revendication 6, dans lequel l'étape de calcul de la carte de profondeur (60) comprend en outre les étapes ci-dessous consistant à :

extraire des pixels correspondant à des caractéristiques dans une pluralité d'images (50) ;
suivre des positions relatives des caractéristiques dans la pluralité d'images (50) ;
déterminer des informations de pose de caméra pour la pluralité d'images (50) ;
calculer des distances relatives entre les mêmes caractéristiques dans la pluralité d'images (50) ; et
déterminer, pour chaque pixel extrait, une profondeur relative, sur la base des distances relatives entre les caractéristiques.

**8.** Procédé selon la revendication 7, dans lequel les caractéristiques dans la pluralité d'images (50) comprennent en outre au moins un point d'inflexion ou un point d'un contour d'objet.

**9.** Procédé selon la revendication 7, comprenant en outre l'étape consistant à affiner la carte de profondeur (60) en supprimant toute distorsion dans l'image (50) avant d'identifier la pluralité de profondeurs distinctes auxquelles des objets sont situés ;
dans lequel l'étape consistant à affiner la carte de profondeur (60) en supprimant toute distorsion comprend en outre l'étape consistant à mettre en oeuvre une transformation sur chaque pixel.

**10.** Procédé selon la revendication 1, comprenant en outre l'étape consistant à affiner la carte de profondeur (60) en définissant les contours des bords dans la pluralité d'images (50) avant d'identifier la pluralité de profondeurs distinctes auxquelles des objets sont situés.

**11.** Procédé selon la revendication 1, dans lequel le véhicule aérien sans pilote inclut une charge utile (114) incluant un ou plusieurs dispositifs de capture d'image (113),
le procédé comprenant en outre les étapes ci-dessous consistant à :

commander audit un ou auxdits plusieurs dispositifs de capture d'image de suivre une cible ; et
obtenir des images (50) de la cible à partir du dispositif de capture d'image, les images (50) comprenant une première image capturée à un premier emplacement et une seconde image capturée à un second emplacement.

**12.** Procédé selon la revendication 11, comprenant en outre les étapes ci-dessous consistant à :

identifier la cible à partir des images obtenues (50) ; et
associer la cible à ladite une profondeur identifiée dans la pluralité de profondeurs distinctes.

**13.** Système destiné à traiter une image (50) présentant un premier ensemble de pixels (51), le système comprenant :

une mémoire (136) dans laquelle sont stockées des instructions ; et
un ou plusieurs processeurs (137) configurés de manière à exécuter les instructions pour :

générer une carte de profondeur (60) de l'image (50), la carte de profondeur (60) incluant un second ensemble de valeurs de pixels (61) représentatives de distances d'objets dans l'image (50) ;

18

identifier une pluralité de profondeurs distinctes auxquelles des objets sont situés dans l'image (50), sur la base de la carte de profondeur (60) ;

utiliser la carte de profondeur (60) en vue de déterminer une distance relative entre une profondeur identifiée dans la pluralité de profondeurs distinctes et chacune des autres profondeurs identifiées dans la pluralité de profondeurs distinctes ;

ordonner le second ensemble de valeurs de pixels (61) associées à la distance relative déterminée pour chaque profondeur, dans un ordre décroissant, d'une distance relative la plus éloignée à une distance relative la plus proche telle que mesurée à partir de la profondeur identifiée ; et

flouter des pixels dans le premier ensemble de pixels (51) sur la base de chaque distance relative déterminée, dans lequel les pixels dans le premier ensemble de pixels (51) sont floutés de manière itérative dans l'ordre décroissant d'une distance relative la plus éloignée à une distance relative la plus proche, dans lequel, pour chaque itération, l'étape de floutage des pixels dans le premier ensemble de pixels se produit dans des pixels associés à une distance relative déterminée et dans des pixels présentant une distance relative plus éloignée jusqu'à la distance relative déterminée.

**14.** Support non transitoire lisible par ordinateur stockant des instructions qui, lorsqu'elles sont exécutées par au moins un processeur (137), mettent en œuvre les opérations du procédé selon l'une quelconque des revendications 1 à 12.

**FIG. 1A**

EP 3 488 603 B1

**FIG. 1B**

EP 3 488 603 B1

**FIG. 1C**

CONTROLLER 162

163

MEMORY 166

COMMUNICATION DEVICE 168

PROCESSOR 167

TRANSMITTER 165

FLIGHT CONTROL MODULE 182

RECEIVER 164

IMAGE PROCESSING MODULE 188

INPUT DEVICE(S) 169

EP 3 488 603 B1

**FIG. 2**

EP 3 488 603 B1

700 ⟿ | Generate a depth map of the image

330

Obtain target object

Identify depths of objects in image ⟿ 315

Associate target object with an identified depth

Determine relative distances of identified depths from one identified depth ⟿ 320

335

Blur pixels based on determined relative distances ⟿ 600

300

**Fig. 3**

**FIG. 4**

**FIG. 5**

600 — Begin blurring pixels based on determined relative distances

605 — Order identified relative distances in descending order from one identified depth

610 — Blur pixels in the first relative distance in the order

615 — Blur pixels with relative distances greater than the first relative distance in the order

Blur pixels in the next identified relative distance in the order — 620

Blur pixels with greater relative distances than the next identified distance in the order — 625

All relative distances processed? — 630

No

635 — End

Yes

**Fig. 6**

700 — Generate a depth map of the image

705 — Obtain a plurality of images

710 — Extract pixels corresponding to features in the images

Filter the extracted pixels

735

715 — Track relative positions of the features in the images

720 — Determine camera pose information for the images

725 — Calculate relative distances between the same features in the images

730 — Determine relative depths of each extracted pixel to form depth map

740

Refine depth map

315 — Identify depths of objects in image

*Fig. 7*

28

FIG. 8

Fig. 9

**EP 3 488 603 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015116353 A1
- US 2014211045 A1
- WO 2016064248 A1
- EP 2410377 A1
- WO 2017043031 A1